# EUROPEAN PATENT SPECIFICATION

(11) **EP 1 073 825 B1**
(45) Date of publication and mention of the grant of the patent: **12.02.2003**
(21) Application number: 99920796.2
(22) Date of filing: 22.04.1999
(51) Int. Cl.: E21B 43/10, E21B 29/10, F16L 11/12, F16L 55/165, F16L 9/12

(54) **FOLDABLE TUBE**
FALTBARES ROHR
TUBE PLIABLE

(30) Priority: 23.04.1998 EP 98303147
(43) Date of publication of application: 07.02.2001
(73) Proprietor: SHELL INTERNATIONALE RESEARCH MAATSCHAPPIJ B.V., 2596 HR Den Haag (NL)
(72) Inventor: LOHBECK, Wilhelmus, Christianus, Maria, NL-2288 GD Rijswijk (NL)
(86) International application number: EP9902838
(87) International publication number: WO99055999

(56) References cited:
- EP-A- 0 397 875
- US-A- 3 358 760
- US-A- 3 489 220
- US-A- 3 508 587
- US-A- 3 648 895
- US-A- 3 811 633
- US-A- 5 224 796

## Description

### Background of the Invention

The invention relates to a foldable tube and to a method for placing such a tube in a tubular cavity.

It is known to fold flexible hoses into a flattened shape in order to facilitate easy storage, for example by reeling the flattened hose around a small diameter reeling drum.

It is also known to insert well tubulars in a contracted position into a wellbore and to expand the tubular downhole at the location where the tubular is to be used. Soviet patent specification SU-633825, European patent specification 0397875 and US patent specifications Nos. 3,358,760 and 3,489,220 disclose the use of an initially corrugated or dented tube which is expanded downhole into a tubular shape. International patent application, publication No. WO 97/06345 discloses the use of a flexible well tubular which is folded into a kidney shape during its descent through the wellbore and which is inflated downhole to bring the tubular into a cylindrical shape, whereafter the tubular is polymerised to provide a well casing. This known tubular has an Y-shape and serves to provide a seal at the junction between a main well and a branch well. Disadvantages of these known expandable corrugated and flexible foldable tubes are that they need to be relatively thin to allow an easy expansion within a borehole or other cavity and that the shape of the unfolded tube is not well defined.

US patent specification 3,648,895 discloses a collapsible tube container for holding toothpaste and the like, which has a series of longitudinal thinned wall portions which allow the container to be folded flat easily into e.g. a double M-shape so as to expel substantially all of the contents of the container upon squeezing.

US patent specifications Nos. 3,508,587 and 5,224,796 disclose tubes which comprise a series of longitudinal thinned portions that allow the tube to be folded flat easily during storage and/or transport.

US patent specification No. 3,811,633 discloses yet another foldable tube which is made of a series of longitudinal strips which are interconnected by rivets or the like such that the tube can be folded flat into a double M-shape and wound into a coil during storage and/or transport and such that the tube can be unfolded into a substantially square configuration. The unfolded square tube is relatively fragile and may collapse easily again into its flattened shape.

It is an object of the present invention to alleviate the disadvantages of the known foldable tubes and to provide a foldable tube which can be folded and unfolded relatively easily but which generates an expanded tube which is robust, does not refold easily, and which has a well defined tubular shape.

### Summary of the Invention

The foldable tube according to the invention is characterized by the characterizing features of claim 1. The method of placing a foldable tube in a cavity in accordance with the present invention is claimed in claim 11.

When used in this specification the term unfolding of the tube into a substantially cylindrical or elliptical shape means that at least the hinges of the unfolded tube are located in a substantially cylindrical or elliptical surface of revolution. The relatively rigid wall segments of the tube between the hinges may be curved such that when the tube is unfolded the wall segments are also located in or close to said cylindrical or elliptical surface of revolution. Alternatively the relatively rigid wall segments of the tube may be flat and form polygonal chords within said surface of revolution.

The presence of the hinges in the vicinity of the wall of the cylindrical or elliptical wall of the cavity induces the wall segments of the tube between the hinges to form a snaplock that inhibits refolding of the unfolded tube.

An advantage of the use of plastic or other hinges in accordance with the present invention is that they lock the unfolded tube in its tubular shape and that the tube can be made cheaply by creating the hinges in the wall of a tube which has, apart from the hinges, a similar wall strength and thickness as a conventional tube that would normally be used in the same situation.

It is preferred that said relatively flexible areas are formed by trough-shaped grooves in the wall of the tube, which grooves are oriented in a parallel or helical direction relative to a longitudinal axis of the tube.

Alternatively the relatively weak areas are formed by real hinges or by mutually parallel axial or helical rows of holes. These holes may pass through the wall of the tube or extend only partially into the outer or inner surface of the wall of the tube.

It is also preferred that at least one set of four grooves is arranged in the wall of the tube such that each set of four grooves defines a tube segment that can be folded as a U-shaped recess inwardly into the tube. The sides of said U-shaped recess may even be folded towards each other in a delta-shape and the tips of the recess may be brazed together to fix the tube in its folded shape until a relatively low tension force is exerted to the brazed joint.

The tube can be folded to a high degree of contraction if two sets of four grooves are arranged symmetrically at opposite sides of the tube such that upon folding of the tube two delta- or U-shaped recesses are formed at opposite sides of the tube.

If the tube needs to be foldable to a less high degree of contraction then a single groove or a plastic hinge formed by a tubule may be arranged at one side and a set of four grooves at an opposite side of the inner wall of the tube.

The latter embodiment of the tube according to the invention can be used as a well liner at the junction between a main well and a branch well if a branch tube is secured around a window in the wall of the tube between said single groove and an adjacent groove of said set of four grooves at said opposite side of the tube.

In that case the tube is lowered through the main well towards the junction after folding the tube into its contracted shape. At the junction the tube is then expanded such that the branch tube is pushed into the entrance of the branch well.

The tube according to the present invention can be made of any material which is plastically deformable such that the tube does not break as a result of the folding and unfolding operations.

Suitable materials are steel, in particular formable steel grades such as high strength low alloy steels and dual phase steels, and plastic materials such as polypropylene and polyvinylchloride.

### Brief description of the drawings

The invention will be described in more detail and by way of example with reference to the accompanying drawings, in which
Fig. 1 is a cross-axial sectional view of a foldable tube according to the invention which comprises two sets of four grooves in the inner wall of the tube;
Fig. 2 shows the tube of Fig. 1 at a somewhat reduced scale wherein the tube is folded into its contracted shape such that two U-shaped recesses are formed at opposite sides of the tube;
Fig. 3 is a cross-axial sectional view of an alternative embodiment of the foldable tube according to the present invention wherein a single groove is present at one side and a set of four grooves is present at an opposite side of the tube;
Fig. 4 shows the tube of Fig. 3 at a somewhat reduced scale wherein the tube is folded into its contracted shape such that a U-shaped recess is formed at the upper side of the tube;
Fig. 5 is a cross-axial sectional view of a foldable tube according to the invention inside a well wherein the tube is provided with a branch tube which is inserted into the entrance of a branch well upon downhole expansion of the foldable tube;
Fig. 6 is a cross-axial sectional view of a foldable tube according to the present invention with a U-shaped recess at one side and a hinge provided by a tubule at the other side;
Fig. 7 is a cross-axial sectional view of a foldable tube according to the invention which comprises three axial grooves at one side of the tube;
Fig. 8 is a cross-axial sectional view of a foldable tube according to the present invention where the folded tube and the U-shaped recesses have a delta-shape; and
Fig. 9 is a cross-axial sectional view of a foldable tube according to the present invention where delta-shaped recesses are present at both sides of the tube.

### Detailed description of the invention

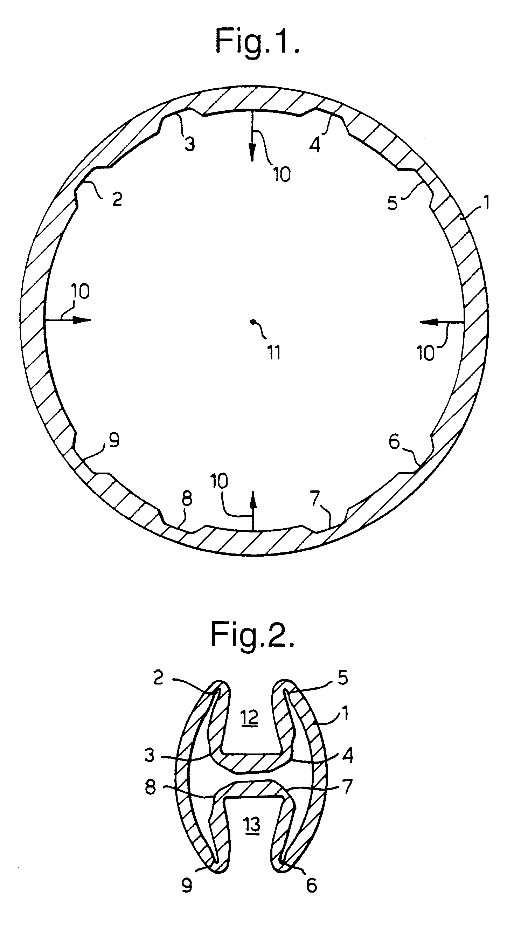

Referring to Fig. 1 there is shown a foldable tube 1 which comprises two sets of axial trough-shaped grooves 2-9 in the inner wall of the tube 1.

Fig. 1 shows the tube 1 in its unfolded cylindrical shape and the grooves 2-9 each have a similar depth and width. One set of four grooves 2-5 has been machined into the inner wall at the upper side of the tube 1 and the other set of four grooves 6-9 has been machined into the inner wall at the lower side of the tube 1, such that the two sets of grooves 2-5 and 6-9 are symmetrical relative to each other. The distances between the grooves 2 and 3, the grooves 4 and 5, the grooves 6 and 7 and the grooves 8 and 9 are equal to each other.

Furthermore the distance between the grooves 3 and 4 is equal to the distance between the grooves 7 and 8 and the distance between the grooves 2 and 9 is equal to the distance between the grooves 5 and 6.

The symmetrical arrangement of two sets of four grooves 2-5 and 6-9 enables the tube 1 to be folded such that the wall segments between the grooves 3 and 4, 7 and 8, 5 and 6 and 2 and 9 are moved inwardly towards the centre 11 of the tube 1 as illustrated by arrows 10 and the tube 1 obtains its contracted shape as is shown in Fig. 2.

Fig. 2 shows how the relatively thin parts of the tube 1 adjacent to the grooves 2-9, where the wall thickness is smaller than the wall thickness of other parts of the tube 1, act as plastic hinges during the folding procedure.

As a result of the hinging action the grooves 3, 4 and 7 and 8 open up whereas the grooves 2, 5, 6 and 9 are largely closed so that a first U-shaped recess 12 is formed at the upper side of the tube 1 and a second U-shaped recess 13 is formed at the lower side of the tube 1. The folded tube 1 shown in Fig. 1 has the shape of a rivet which has a significantly smaller outer width than the inner width of the unfolded tube shown in Fig. 1. Therefore the folded tube can be moved easily through the bore of a conduit or underground well, even through narrow passages formed by valves and sharp curvatures.

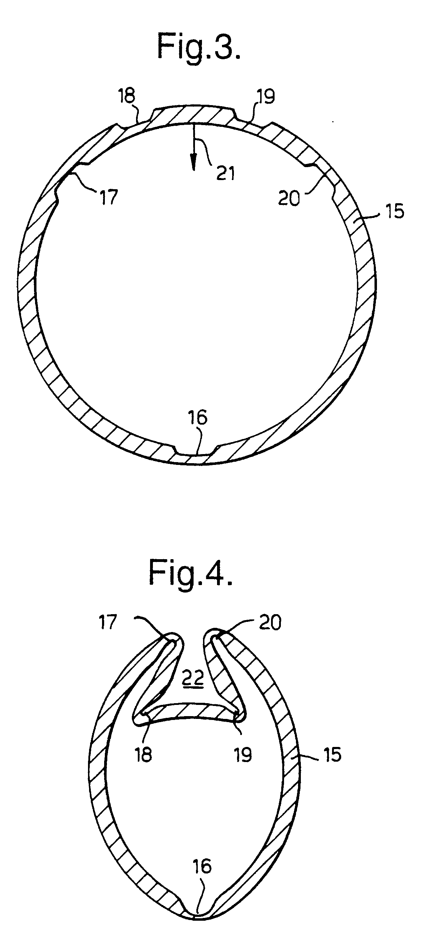

Fig. 3 shows an alternative embodiment of the foldable tube according to the invention in which the tube 15 comprises a single axial groove 16 at the lower side of the tube 15 and a set of four axial grooves 17, 18, 19 and 20 at the upper side of the tube 15.

The grooves 16 and 17 and 20 have been machined in the inner wall of the tube 15 and the grooves 18 and 19 have been machined in the outer wall of the tube 15.

The relatively thin wall parts of the tube 15 adjacent to the grooves 16-20 form wall areas which are more flexible than other parts of the tube 15. The groove pattern shown in Fig. 3 allows the wall segment between the grooves 17 and 20 to be folded inwardly in the direction of arrow 21 such that the tube 15 obtains the folded shape shown in Fig. 4.

Fig. 4 shows that on folding of the tube 15 a U-shaped recess 22 is formed by the wall-segment of the tube 15 between the set of four grooves 17-20 at the upper side of the tube 15. The two relatively big wall segments of the tube 15 between the groove 16 at the lower side and the two outer grooves 17 and 20 at the upper side of the tube 15 thereby pivot towards each other about the plastic hinge formed the at the bottom of the tube 15 near the groove 16.

The tube 15 shown in Fig. 4 can be unfolded by moving an expansion mandrel in axial direction through the tube 15 and/or by inflating the tube 15.

The unfolded tube 15 then obtains its cylindrical shape as is shown in Fig. 3 and the configuration of parallel grooves 16-20 will than lock the tube 15 since the wall segments between the grooves 16-20 form arches which will be subject to hoop stress if the hydraulic pressure outside the tube 15 is higher than the hydraulic pressure inside the tube 15.

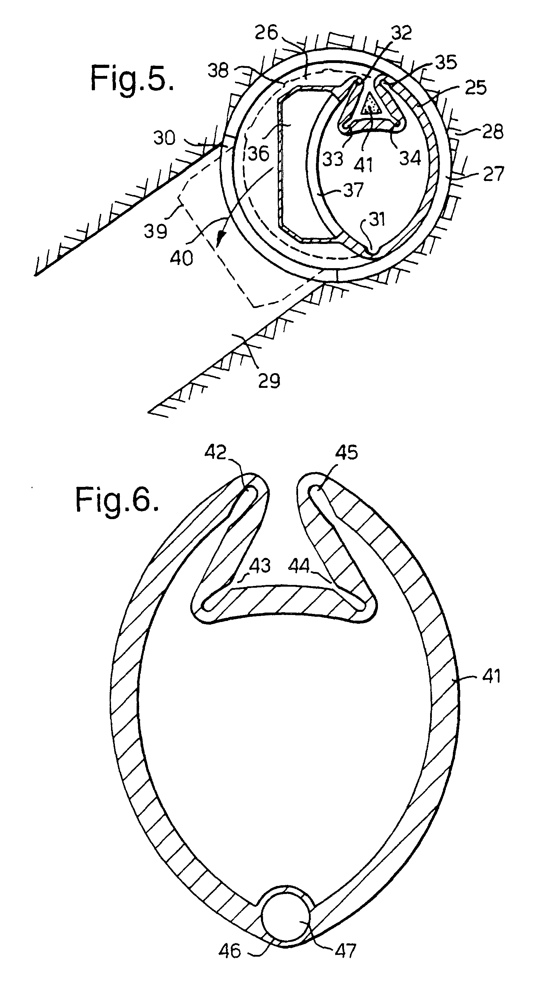

Fig. 5 shows a foldable tube 25 which is similar to the foldable tube 15 shown in Figs. 3 and 4 inside a main well 26 in which a well casing 27 has been cemented in place.

The main well 26 passes through an underground formation 28 and a branch well 29 has been drilled through a window 30 in the well casing 27 laterally away from the main well 26 into the formation 28.

The tube 25 is made of steel and comprises a single groove 31 at its lower side and a set of four grooves 32-35 at its upper side. A branch tubing section 36 has been welded to the wall segment of the tube 15 between the grooves 31 and 32 around a window 37 that has been machined in the wall of the tube 25.

The tube 25 has been moved in its folded contracted position through the main well 26 until the branch tubing section 36 is located adjacent to the entrance of the branch well 29.

Then the tube 25 is expanded by an expansion mandrel into its cylindrical shape, which is illustrated by broken lines 38 such that the branch tubing section 36 is pushed through the window 30 in the well casing 27 into the branch well 29 as illustrated by broken lines 39 and the arrow 40.

An elongate breakable container 41 containing a sealing agent is arranged within the delta-shaped recess formed between the set of four grooves 32-35 at the upper side of the tube 25 which container is squeezed between the inner wall of the well casing 27 and the outer wall of the tube 25 if the tube is unfolded to its cylindrical shape 38. The sealing agent is thereby squeezed into the annular space surrounding the unfolded tube 25 and the branch tubing segment 39 and provides on curing an adequate seal which also fixes the unfolded tube 25 and branch tubing section 36 inside the main and the branch wells 26 and 29.

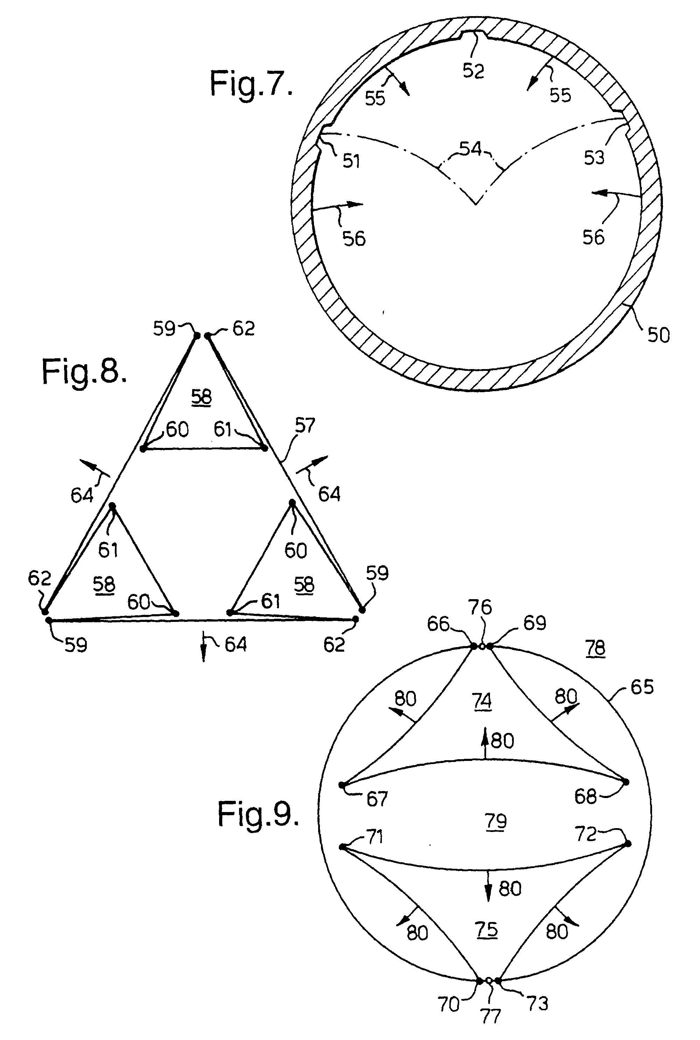

Fig. 6 shows a folded tube 41 which has a set of four grooves 42, 43, 44 and 45 at its upper side and a single tubular hinge 46 at its lower side.

The tubular hinge 46 provides an area where the wall of the tube is more flexible than the other parts of the tube 41, apart from the areas of the tube 41 adjacent to the grooves 43-45.

The tubular hinge 46 provides moreover an area where the wall of the tube can be deformed in circumferential direction during the unfolding procedure.

After completion of the unfolding procedure the interior 47 of the tubular hinge 46 can be filled with a filling agent which provides support and fixes the tubular hinge 46 in its expanded position. The interior 47 of the tubular hinge 46 may also contain electric or hydraulic conduits for transmission of electric and/or hydraulic power and/or signals along the length of the tube 41.

Fig. 7 shows an embodiment of the foldable tube according to the invention where the tube 50 comprises at its upper side three mutually parallel axial or helical grooves 51, 52 and 53 which define three plastic hinges that allow the upper side of the tube 50 to be folded inwardly as illustrated by phantom lines 54 and arrows 55.

After the upper side of the tube 50 has been folded inwardly the outer width of the lower side of the tube 50 can be reduced as illustrated by arrows 56 by pulling a circumferential or helical wire (not shown) around the thus folded tube 50.

The tube 50 is then unfolded by increasing the hydraulic pressure in the interior of the tube 50 which breaks the wire and induces the tube 50 to unfold into its cylindrical shape shown in Fig. 7.

Fig. 8 shows an embodiment of the foldable tube according to the invention where the folded tube 57 has a delta-shape and comprises at each corner a delta-shaped recess 58.

Each delta-shaped recess 58 is formed by bending the tips of the legs of a U-shaped recess towards each other and each recess is defined by a set of four plastic hinges 59, 60, 61 and 62 where the wall of the tube 57 is more flexible than at other parts of the tube 57.

The tube 57 is unfolded by increasing the hydraulic pressure in the interior 63 of the tube 57 which causes the tube 57 to expand in the direction of the arrows 64 so that the recesses 58 are removed. By further increasing the hydraulic pressure in the interior 63 of the tube 57, the tube 57 is brought into a polygonal, substantially cylindrical shape (not shown).

Fig. 9 shows a tube according to the invention where the tube 65 comprises a set of four axial plastically deformable hinges 66, 67, 68 and 69 at its upper side and also a set of four axial plastically deformable hinges 70, 71, 72 and 73 at its lower side.

Each set of four hinges 66-69 and 70-73 defines a delta-shaped recess 74 and 75, respectively.

The two hinges 66 and 69 at the top of the folded tube 65 and also the two hinges 70 and 73 at the bottom of the tube 65 have been brazed together. The thus formed brazed joints 76 and 77 created a seal between the interior of the delta-shaped recesses 74 and the exterior 78 of the tube 65.

The tube 65 is suitable to be used in its illustrated folded shape as a drill pipe where drilling mud is pumped through the interior 79 of the tube 65 and through the delta-shaped recesses 74 and 75 to a drill bit (not shown).

After a borehole section has been drilled a casing is then created by inflating the tube 65 using a high pressure fluid or expansion mandrel (not shown) so that the brazed joints 76 and 77 break open and the tube 65 unfolds into its cylindrical shape as illustrated by arrows 80. The drill bit is then pulled to surface on a wireline or coiled tubing passing through the interior 79 of the expanded tube 65.

The outer wall of the unfolded tube may be covered with an elastomeric coating which creates a seal between the unfolded tube and the borehole wall.

The tube 65 and also the tube configurations illustrated in the other drawings can be spooled around a reeling drum in their folded shape and reeled from the drum into an underground borehole to provide a lining of the borehole wall or inside a corroded or damaged well tubular.

The walls of the tube according to the invention may comprise sieve openings of a predetermined size so that the tube provides a well screen which is lowered into the borehole in its folded shaped and then unfolded downhole by moving an expansion mandrel through the tube or by inflating a balloon in the interior of the tube. The unfolding procedure does not vary the sieve opening size so that unfolded tube provides a sandscreen with a well defined sieve opening size.

It will be understood that the relatively flexible areas that form the hinges of the foldable tube according to the invention may also be formed by an elastic material or elastic springs which pull the adjacent ends of the relatively rigid wall segments together. These springs may be embedded in circumferential bores and/or grooves in the adjacent wall segments and the abutting ends of these segments may have an interlocking male and female shape so that after unfolding a cylindrical or elliptical tube is created of which the wall thickness at the hinge lines is substantially equal to that of the other parts of the tube.

If in such case at least one hinge is formed by a tubule as shown in Fig. 6 and this tubule is inflated after unfolding of the tube within a cavity then the interlocking male and female ends of the wall segments at the other hinges will be firmly pressed together in a circumferential direction at the end of the unfolding procedure so that the unfolded tube has a virtually uninterrupted wall thickness and strength at the hinge lines.

## Claims

1. A foldable tube (1) comprising a tubular wall having at least three elongate relatively flexible areas (2-9) where the wall is more flexible than other areas of the wall, which areas are oriented in a substantially parallel direction relative to each other along at least a substantial part of the length of the tube (1) so that in use said areas form hinges which define wall segments that are inwardly foldable to bring the tube into a contracted shape and that can be unfolded to bring the tube into a substantially cylindrical or elliptical shape, **characterized in that** the tube (1) is a liner tube for providing a lining within a substantially cylindrical or elliptical tubular cavity (27) and the hinges of the unfolded tube are in use located in the vicinity of the wall of the cavity (27) such that the wall segments between the hinges inhibit refolding of the unfolded liner tube.

2. The foldable tube of claim 1 wherein said relatively flexible areas are formed by trough-shaped grooves (2-9) in the wall of the tube (1), which grooves are oriented in a parallel or helical direction relative to a longitudinal axis of the tube (1).

3. The foldable tube of claim 2 wherein at least one set of four grooves (2-5, 6-9) is arranged in the wall of the tube such that each set of four grooves defines a tube segment that can be folded as a delta- or U-shaped recess (12,13) inwardly into the tube.

4. The foldable tube of claim 3 wherein two sets of four grooves (2-5, 6-9) are arranged symmetrically at opposite sides of the tube (1) such that if the tube (1) is folded into a contracted shape two delta- or U-shaped recesses (12,13) are formed at opposite sides of the tube.

5. The foldable tube of claim 3 wherein a single groove (16,31) is arranged in the inner wall at one side of the tube (15,25) and a set of four grooves (17-20, 32-35) is arranged at an opposite side of the inner wall of the tube (15,25).

6. The foldable tube of claim 5 wherein a branch tube (36) is secured around a window (37) in the wall of the tube (25) which window (37) is located between said single groove (31) in said one half of the tube and an adjacent groove (32) of said set of four grooves (32-35) at said opposite side of the tube (25).

7. The foldable tube of any preceding claim wherein the foldable tube is a well tubular which is insertable in a contracted shape into the well and expandable downhole into a substantially cylindrical shape.

8. The foldable tube of claim 6 wherein the tube (35) is a well casing at a branchpoint in an underground well and the branch tube (36) forms part of a well casing or liner in a well branch (29), and the tube is insertable in a contracted shape into the well and expandable downhole into a substantially cylindrical shape such that the branch tube (36) is positioned at the entrance of the branch well (29) near the branchpoint.

9. The foldable tube of claim 1 wherein the tube (1) is made of steel.

10. The foldable tube of claim 1 wherein the tube (1) is made of a plastic material.

11. A method of placing a foldable tube (25) according to claim 1 in a tubular cavity (27), the method comprising inserting the tube (25) folded in its contracted shape into the cavity (27), unfolding the tube (25) into its substantially cylindrical shape at a selected location within the cavity (27) and securing the tube within the cavity, wherein the cavity (27) has a substantially cylindrical or elliptical shape and the tube (25) is unfolded such that the hinges (31-35) are located in the vicinity of the wall of the cavity (27) thereby inducing the wall segments of the unfolded tube between the hinges to inhibit refolding of the unfolded tube.

12. The method of claim 11 wherein the tube (1) comprises at least one set of four grooves (2-5, 6-9) according to claim 4 which grooves define a delta- or U-shaped recess (12,13) when the tube is inserted into the cavity and a tubular container containing a sealing agent is arranged within said recess when the tube is inserted into the cavity, which container is squeezed and breaks open as a result of the unfolding of the tube within the cavity and sealing agent is released into the annular space between the unfolded tube and the wall of the cavity, which sealing agent is then allowed to create an annular seal between the unfolded tube and the cavity wall.

13. The method of claim 11 wherein the tube (1) is unfolded by inserting a sealing plug at one end of the tube (1) and pumping a high pressure fluid into the other end of the tube.

## Patentansprüche

1. Faltbares Rohr (1) mit einer Rohrwand, die zumindest drei langgestreckte, relativ flexible Zonen (2-9) aufweist, in denen die Wand flexibler als in anderen Zonen der Wand ist, wobei die Zonen relativ zueinander entlang zumindest eines wesentlichen Teiles der Länge des Rohres (1) in einer im wesentlichen parallelen Richtung orientiert sind, so daß im Gebrauch diese Zonen Gelenke bilden, welche Wandsegmente definieren, die einwärts faltbar sind, um das Rohr in eine zusammengezogene Gestalt zu bringen, und entfaltet werden können, um das Rohr in eine im wesentlichen zylindrische oder elliptische Gestalt zu bringen, **dadurch gekennzeichnet, daß** das Rohr (1) ein Auskleidungsrohr zur Bildung einer Auskleidung innerhalb eines im wesentlichen zylindrischen oder elliptischen rohrförmigen Hohlraumes (27) ist und die Gelenke des entfalteten Rohres im Gebrauch in der Nähe der Wand des Hohlraumes (27) derart angeordnet sind, daß die Wandsegmente zwischen den Gelenken ein Rückfalten des entfalteten Auskleidungsrohres verhindern.

2. Faltbares Rohr nach Anspruch 1, bei welchem die relativ flexiblen Zonen durch rinnenförmige Nuten (2-9) in der Wand des Rohres (1) gebildet sind, wobei die Nuten in einer parallelen oder wendelförmigen Richtung relativ zu einer Längsachse des Rohres (1) verlaufen.

3. Faltbares Rohr nach Anspruch 2, bei welchem zumindest ein Satz von vier Nuten (2-5, 6-9) in der Wand des Rohres derart angeordnet ist, daß jeder Satz von vier Nuten ein Rohrsegment definiert, das zu einem delta- oder U-förmigen Rücksprung (12, 13) nach innen in das Rohr hinein gefaltet werden kann.

4. Faltbares Rohr nach Anspruch 3, bei welchem zwei Sätze von vier Nuten (2-5, 6-9) symmetrisch auf gegenüberliegenden Seiten des Rohres (1) derart angeordnet sind, daß bei der Faltung des Rohres (1) in eine zusammengezogene Gestalt zwei delta- oder U-förmige Rücksprünge (12, 13) auf gegenüberliegenden Seiten des Rohres geformt werden.

5. Faltbares Rohr nach Anspruch 3, bei welchem eine einzige Nut (16, 31) in der Innenwand auf einer Seite des Rohres (15, 25) vorgesehen ist, und ein Satz von vier Nuten (17-20, 32-35) auf der gegenüberliegenden Seite der Innenwand des Rohres (15, 25) angeordnet ist.

6. Faltbares Rohr nach Anspruch 5, bei welchem ein Zweigrohr (36) um ein Fenster (37) herum in der Wand des Rohres (25) befestigt ist, wobei das Fenster (37) zwischen der einzigen Nut (31) in der einen Hälfte des Rohres und einer benachbarten Nut (32) in dem Satz von vier Nuten (32-35) auf der gegenüberliegenden Seite des Rohres (25) angeordnet ist.

7. Faltbares Rohr nach einem der vorhergehenden Ansprüche, bei welchem das faltbare Rohr ein Bohrlochrohr ist, das in zusammengezogener Gestalt in das Bohrloch einsetzbar und im Bohrloch zu einer im wesentlichen zylindrischen Gestalt expandierbar ist.

8. Faltbares Rohr nach Anspruch 6, bei welchem das Rohr (35) eine Bohrlochauskleidung an einem Abzweigpunkt in einem Untergrundbohrloch ist, und das Zweigohr (36) Teil einer Bohrlochauskleidung oder eines Filters in einem Bohrlochzweig (29) ist, und das Rohr in zusammengezogener Gestalt in das Bohrloch einführbar und im Bohrloch zu einer im wesentlichen zylindrischen Gestalt expandierbar ist, derart, daß das Zweigrohr (36) am Eingang des Zweigbohrloches (39) nahe dem Abzweigpunkt angeordnet ist.

9. Faltbares Rohr nach Anspruch 1, bei welchem das Rohr (1) aus Stahl besteht.

10. Faltbares Rohr nach Anspruch 1, bei welchem das Rohr (1) aus Kunststoffmaterial besteht.

11. Verfahren zum Anordnen eines faltbaren Rohres (25) gemäß Anspruch 1 in einem rohrförmigen Hohlraum (27), wobei das Verfahren das Einsetzen des Rohres (25), welches in seine zusammengezogene Gestalt gefaltet ist, in den Hohlraum (27) umfaßt, das Entfalten des Rohres (25) in seine im wesentlichen zylindrische Gestalt an einer vorbestimmten Stelle innerhalb des Hohlraumes (27), und das Befestigen des Rohres innerhalb des Hohlraumes, wobei der Hohlraum (27) im wesentlichen zylindrische oder elliptische Gestalt hat und das Rohr (25) derart entfaltet wird, daß die Gelenke (31-35) in der Nähe der Wand des Hohlraumes (27) liegen, wodurch Wandsegmente des entfalteten Rohres zwischen den Gelenken erzeugt werden, um das Rückfalten des entfalteten Rohres zu verhindern.

12. Verfahren nach Anspruch 11, bei welchem das Rohr (1) zumindest einen Satz von vier Nuten (2-5, 6-9) gemäß Anspruch 4 enthält, wobei die Nuten einen delta- oder U-förmigen Rücksprung (12, 13) definieren, wenn das Rohr in den Hohlraum eingesetzt wird, und ein rohrförmiger Behälter, welcher ein Dichtungsmittel enthält, innerhalb des Rücksprunges angeordnet ist, wenn das Rohr in den Hohlraum eingesetzt wird, wobei der Behälter als Ergebnis des Entfaltens des Rohres innerhalb des Hohlraumes zusammengedrückt wird und aufbricht, und das Dichtungsmittel in dem ringförmigen Raum zwischen dem entfalteten Rohr und der Wand des Hohlraumes freigesetzt wird, wobei dann das Dichtungsmittel eine ringförmige Dichtung zwischen dem entfalteten Rohr und der Hohlraumwand bilden kann.

13. Verfahren nach Anspruch 11, bei welchem das Rohr (1) entfaltet wird, indem ein Dichtungsstopfen an einem Ende des Rohres (1) eingesetzt und ein Hochdruckfluid in das andere Ende des Rohres gepumpt wird.

## Revendications

1. Tube pliable (1) comprenant une paroi tubulaire présentant au moins trois zones allongées (2 à 9) relativement flexibles sur lesquelles la paroi est plus flexible que dans d'autres zones de la paroi, lesquelles zones sont orientées les unes par rapport aux autres dans une direction essentiellement parallèle le long d'au moins une partie essentielle de la longueur du tube (1) de telle sorte qu'en utilisation, lesdites zones forment des charnières qui définissent des segments de paroi qui peuvent être pliés vers l'intérieur pour amener le tube dans une forme contractée et qui peuvent être déployés pour amener le tube dans une forme essentiellement cylindrique ou elliptique, **caractérisé en ce que** le tube (1) est un tube de garnissage destiné à fournir un garnissage dans une cavité tubulaire (27) essentiellement cylindrique ou elliptique, et en utilisation, les charnières du tube déployé sont situées au voisinage de la paroi de la cavité (27) de telle sorte que les segments de paroi situés entre les charnières empêchent que le tube de garnissage déployé se replie.

2. Tube pliable selon la revendication 1, dans lequel lesdites zones relativement flexibles sont formées par des rainures (2 à 9) en forme de creux allongés dans la paroi du tube (1), lesquelles rainures sont orientées dans une direction parallèle ou hélicoïdale par rapport à un axe longitudinal du tube (1).

3. Tube pliable selon la revendication 2, dans lequel au moins un ensemble de quatre rainures (2 à 5, 6 à 9) est agencé dans la paroi du tube de telle sorte que chaque ensemble de quatre rainures définit un segment de tube qui peut être plié vers l'intérieur du tube sous la forme d'un creux (12, 13) en forme de delta ou de U.

4. Tube pliable selon la revendication 3, dans lequel deux ensembles de quatre rainures (2 à 5, 6 à 9) sont agencés symétriquement sur les côtés opposés du tube (1) de telle sorte que si le tube (1) est plié sous une forme contractée, deux creux (12, 13) en forme de delta ou de U sont formés sur des côtés opposés du tube.

5. Tube pliable selon la revendication 3, dans lequel une rainure unique (16, 31) est agencée dans la paroi intérieure sur un côté du tube (15, 25), et un ensemble de quatre rainures (17 à 20, 32 à 35) est agencé sur un côté opposé de la paroi intérieur du tube (15, 25).

6. Tube pliable selon la revendication 5, dans lequel un tube de ramification (36) est fixé autour d'une fenêtre (37) ménagée dans la paroi du tube (25), laquelle fenêtre (37) est située entre ladite rainure unique (31) située dans ladite moitié du tube et une rainure (32) adjacente dudit ensemble de quatre rainures (32 à 35) situé sur ledit côté opposé du tube (25).

7. Tube pliable selon l'une quelconque des revendications précédentes, dans lequel le tube pliable est une tubulure de puits qui peut être insérée dans le puits sous une forme contractée et qui peut être déployée en une forme essentiellement cylindrique en fond de trou.

8. Tube pliable selon la revendication 6, dans lequel le tube (35) est un cuvelage de puits au point de ramification d'un puits souterrain, le tube de ramification (36) faisant partie d'un cuvelage ou d'un chemisage de puits dans une ramification de puits (29), le tube pouvant être inséré sous forme contractée dans le puits et être déployé en fond de trou en une forme essentiellement cylindrique de telle sorte que le tube de ramification (36) soit placé à l'entrée du puits de ramification (29) à proximité du point de ramification.

9. Tube pliable selon la revendication 1, dans lequel le tube (1) est réalisé en acier.

10. Tube pliable selon la revendication 1, dans lequel le tube (1) est réalisé en matière plastique.

11. Procédé pour le placement d'un tube pliable (25) selon la revendication 1 dans une cavité tubulaire (27), le procédé comprenant l'insertion du tube (25) plié sous sa forme contractée dans la cavité (27), le déploiement du tube (25) dans sa forme essentiellement cylindrique en un emplacement sélectionné dans la cavité (27) et la fixation du tube dans la cavité, la cavité (27) présentant une forme essentiellement cylindrique ou elliptique et le tube (25) étant déployé de telle sorte que les charnières (31 à 35) soient situées au voisinage de la paroi de la cavité (27), en amenant ainsi des segments de paroi du tube déployé situé entre les charnières à empêcher que le tube déployé se replie.

12. Procédé selon la revendication 11, dans lequel le tube (1) comprend au moins un ensemble de quatre rainures (2 à 5, 6 à 9) selon la revendication 4, lesquelles rainures définissent un creux (12, 13) en forme de delta ou de U lorsque le tube est inséré dans la cavité, un conteneur tubulaire contenant un agent d'étanchéité étant agencé à l'intérieur dudit creux lorsque le tube est inséré dans la cavité, lequel conteneur est écrasé et se rompt en résultat du déploiement du tube à l'intérieur de la cavité, l'agent d'étanchéité étant libéré dans l'espace annulaire situé entre le tube déployé et la paroi de la cavité, lequel agent d'étanchéité étant ensuite amené à créer un joint d'étanchéité annulaire entre le tube déployé et la paroi de la cavité.

13. Procédé selon la revendication 11, dans lequel le tube (1) est déployé en insérant un bouchon d'étanchéité à une extrémité du tube (1) et en pompant un fluide à haute pression par l'autre extrémité du tube.
